# EUROPEAN PATENT APPLICATION

(11) **EP 4 481 353 A1**
(43) Date of publication of application: **25.12.2024**
(21) Application number: 22933682.1
(22) Date of filing: 23.12.2022
(51) Int. Cl.: G01M 3/02

(54) **GAS MONITORING METHOD, GAS MONITORING DEVICE, GAS MONITORING SYSTEM, AND GAS MONITORING PROGRAM**

(30) Priority: 24.03.2022 JP 2022047701
(71) Applicant: Mitsubishi Heavy Industries, Ltd., Tokyo 100-8332 (JP)
(72) Inventor: KAMIHARA, Nobuyuki, Tokyo 100-8332 (JP); ARAKAWA, Yoshiaki, Tokyo 100-8332 (JP); INUI, Masayuki, Tokyo 100-8332 (JP); SHIBUYA, Hidekazu, Tokyo 100-8332 (JP); KAWAZOE, Kohei, Tokyo 100-8332 (JP); MORITAKE, Takayuki, Tokyo 100-8332 (JP)
(74) Representative: Studio Torta S.p.A.
(86) International application number: PCT/JP2022/047529
(87) International publication number: WO 2023/181555

(57) **Abstract**

A gas monitoring method includes: acquiring a plurality of velocity vectors obtained by performing optical flow estimation processing on a plurality of pieces of image data obtained by imaging at a plurality of times with an imaging device mounted on a UAV; acquiring a downwash velocity u of the UAV based on at least one variable indicating a flight state of the UAV; and extracting a gas velocity vector having a magnitude within a range determined based on the downwash velocity u from the plurality of velocity vectors.

## Description

### Technical Field

The present disclosure relates to a gas monitoring method, a gas monitoring device, a gas monitoring system, and a gas monitoring program.

The present application claims priority based on JP 2022-047701 filed with Japan Patent Office on March 24, 2022, the contents of which are incorporated herein by reference.

### Background Art

Gas may be monitored based on image data captured by an imaging device such as a camera.

Patent Document 1 discloses a black smoke detection system using optical flow estimation. The black smoke detection system uses continuouslycaptured two time-series images of black smoke discharged from a flare stack to obtain velocity vectors generated by the movement of gas in local portions of the images based on optical flow estimation calculated between the two images. Among the velocity vectors obtained in this manner, those whose magnitude and direction are within a predetermined range are extracted as velocity vectors indicating the movement of the black smoke.

### Citation List

### Patent Literature

Patent Document 1: JP 4266535 B

### Summary of Invention

### Technical Problem

Incidentally, the black smoke detection system of Patent Document 1 uses a fixed imaging device (camera), and thus a distance between the imaging device and an imaging target (a smoke stack or the like) is constant, and a scale (a smoke stack or the like) serving as a reference for velocity calculation is present within a coverage area. Accordingly, it is possible to calculate magnitudes (absolute values of velocities) of a plurality of velocity vectors obtained from optical flow estimation.

On the other hand, when an imaging device mounted on an unmanned aerial vehicle (UAV) is used, a distance between the UAV and an imaging target is not constant because the height and position of the UAV are changed. In addition, a scale serving as a reference for velocity calculation does not always exist in an image. Thus, the magnitude (absolute value of velocity) of each of the plurality of velocity vectors cannot be calculated by the optical flow estimation and is unknown. Therefore, it is difficult to appropriately extract a vector indicating the movement of a monitoring target gas from the plurality of velocity vectors obtained by the optical flow estimation.

In view of the above circumstances, an object of at least one embodiment of the present invention is to provide a gas monitoring method, a gas monitoring device, a gas monitoring system, and a gas monitoring program capable of appropriately monitoring a monitoring target gas using image data acquired by an imaging device mounted on a UAV.

### Solution to Problem

A gas monitoring method according to at least one embodiment of the present invention includes:
acquiring a plurality of velocity vectors obtained by performing optical flow estimation processing on a plurality of pieces of image data obtained by imaging at a plurality of times with an imaging device mounted on a UAV;
acquiring a downwash velocity u of the UAV based on at least one variable indicating a flight state of the UAV; and
extracting a gas velocity vector having a magnitude within a range determined based on the downwash velocity u from the plurality of velocity vectors.

A gas monitoring device according to at least one embodiment of the present invention includes:
a velocity vector acquisition unit that acquires a plurality of velocity vectors obtained by performing optical flow estimation processing on a plurality of pieces of image data obtained by imaging at a plurality of times with an imaging device mounted on a UAV;
a downwash velocity acquisition unit that acquires a downwash velocity u of the UAV based on at least one variable indicating a flight state of the UAV; and
an extraction unit that extracts a gas velocity vector having a magnitude within a range determined based on the downwash velocity u from the plurality of velocity vectors.

A gas monitoring system according to at least one embodiment of the present invention includes:
a UAV equipped with an imaging device; an optical flow estimation processing unit configured to calculate a plurality of velocity vectors by performing optical flow estimation processing on a plurality of pieces of image data obtained by imaging at a plurality of times with the imaging device; and
the above-described gas monitoring device configured to extract the gas velocity vector from the plurality of velocity vectors.

A gas monitoring program according to at least one embodiment of the present invention causes
a computer to execute:
acquiring a plurality of velocity vectors obtained by performing optical flow estimation processing on a plurality of pieces of image data obtained by imaging at a plurality of times with an imaging device mounted on a UAV;
acquiring a downwash velocity u of the UAV based on at least one variable indicating a flight state of the UAV; and
extracting a gas velocity vector having a magnitude within a range determined based on the downwash velocity u from the plurality of velocity vectors.

### Advantageous Effects of Invention

According to at least one embodiment of the present invention, a gas monitoring method, a gas monitoring device, a gas monitoring system, and a gas monitoring program capable of appropriately monitoring a monitoring target gas using image data acquired by an imaging device mounted on a UAV are provided.

### Brief Description of Drawings

FIG. 1 is a schematic diagram of a UAV constituting a gas monitoring system according to an embodiment.
FIG. 2 is a schematic diagram of the gas monitoring system according to the embodiment.
FIG. 3 is a flowchart of a gas monitoring method according to an embodiment.
FIG. 4 is a diagram illustrating an example of an image captured by an imaging device.
FIG. 5 is an example of an image obtained by superimposing a plurality of velocity vectors calculated by optical flow estimation on an image captured by the imaging device.
FIG. 6 is a graph showing an example of a correlation between flight height H and flight velocity v of the UAV, and downwash velocity of the UAV.
FIG. 7 illustrates charts showing an example of the correlation between flight height H and flight velocity v of the UAV, and downwash velocity of the UAV.
FIG. 8 is a diagram for explaining a procedure for acquiring a downwash velocity of the UAV.
FIG. 9 is a diagram for explaining a procedure for acquiring a corrected downwash velocity of the UAV.
FIG. 10 is a graph showing an example of a correlation between height from the ground surface and wind velocity.
FIG. 11 is an example of an image obtained by superimposing a gas velocity vector VG extracted in an extraction step on an image captured by the imaging device.
FIG. 12 is a graph for explaining a procedure for extracting a gas velocity vector VG.
FIG. 13 is a histogram showing an example of a frequency distribution of magnitudes of a plurality of velocity vectors.
FIG. 14 is a histogram showing an example of a frequency distribution of directions of a plurality of velocity vectors.
FIG. 15 is a diagram for explaining a reframing process of image data.
FIG. 16 is a diagram for explaining a reframing process of image data.
FIG. 17 is a diagram for explaining a reframing process of image data.

### Description of Embodiments

Embodiments of the present invention will be described with reference to the accompanying drawings. Note that dimensions, materials, shapes, relative arrangement, and the like of components described as the embodiments or illustrated in the drawings are not intended to limit the scope of the present disclosure thereto, and are merely illustrative examples.

### Configurations of Gas Monitoring System and Gas Monitoring Device

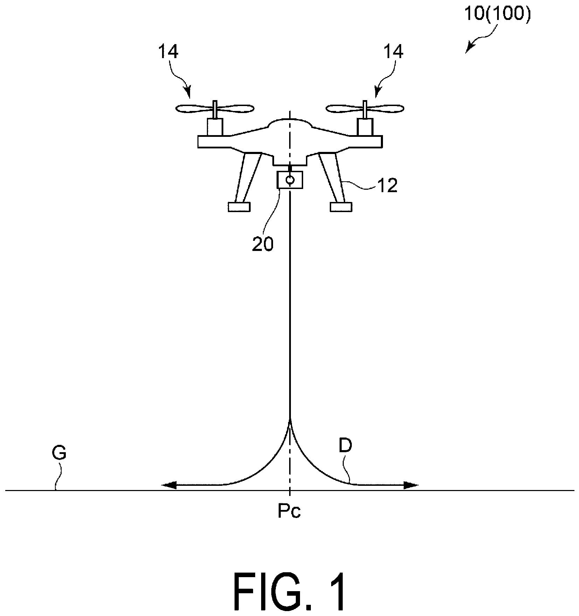

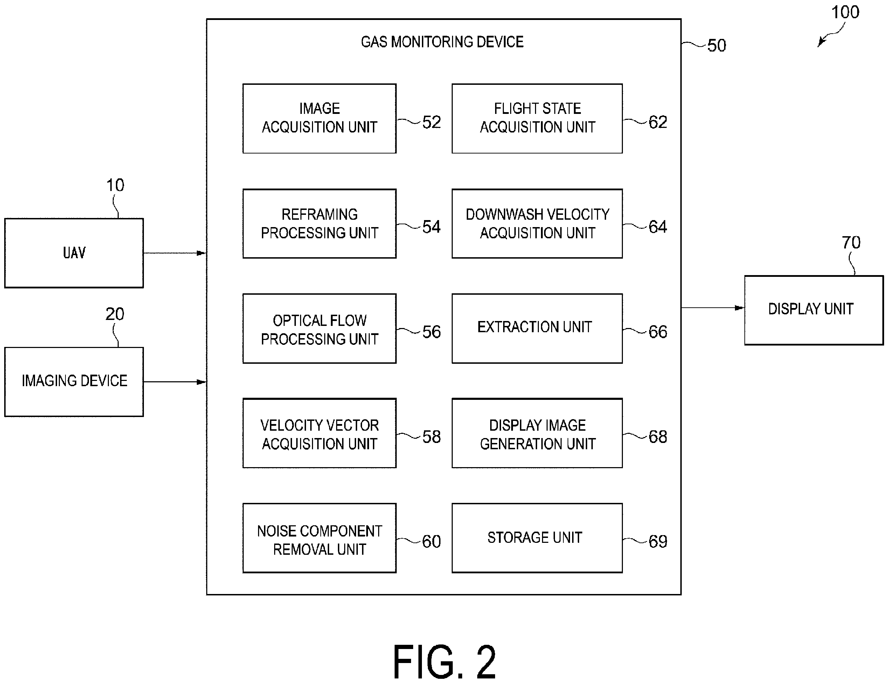

FIG. 1 is a schematic diagram of a UAV constituting a gas monitoring system according to some embodiments, and FIG. 2 is a schematic diagram of a gas monitoring system according to some embodiments.

A gas monitoring device and a gas monitoring system according to some embodiments are a device and a system capable of determining a gas region (a region where a monitoring target gas flows) in an image based on image data obtained by imaging a field with an imaging device (a camera or the like) mounted on an unmanned aerial vehicle (UAV). With the gas monitoring device and the gas monitoring system, it is possible to detect and monitor the monitoring target gas in a field region which is an imaging target (for example, to detect gas leakage from a facility, monitor gas outflow, and the like). The type of the monitoring target gas is not particularly limited. Hereinafter, as an example, a case where carbon dioxide (CO₂) gas is a monitoring target will be described.

As illustrated in FIG. 1 and FIG. 2, a gas monitoring system 100 according to an embodiment includes a UAV 10, an imaging device 20 mounted on the UAV 10, and a gas monitoring device 50 for processing a signal indicating measurement data or image data acquired by the UAV 10 and/or the imaging device 20, or the like.

As illustrated in FIG. 1, the UAV 10 includes a UAV main body 12 and a plurality of propellers 14 (usually three or more propellers 14) attached to the UAV main body 12. Each of the plurality of propellers 14 is configured to be rotationally driven by a motor. The flight height, flight velocity, flight direction, and the like of the UAV 10 can be controlled by adjusting the current value of each motor for driving the plurality of propellers 14. A signal indicating a current value of each motor may be transmitted to the gas monitoring device 50 by wireless communication.

When the UAV 10 flies, a downwash D (downward airflow) is generated by the plurality of propellers 14. The downwash D flowing downward from the UAV 10 collides with a ground surface G to be turned to the horizontal direction, and flows so as to spread radially along the ground surface G from a position Pc directly below the UAV 10 on the ground surface.

The UAV 10 may be provided with an altimeter (not illustrated) for measuring a flight height H of the UAV 10 or a velocimeter (not illustrated) for measuring a flight velocity v of the UAV 10. A signal indicating the flight height H of the UAV 10 acquired by the altimeter and/or a signal indicating the flight velocity v of the UAV 10 acquired by the velocimeter may be transmitted to the gas monitoring device 50 by wireless communication.

The imaging device 20 can continuously image a field below the UAV 10 in time series in a state in which the UAV 10 is flying. Image data indicating an image captured by the imaging device 20 may be transmitted to the gas monitoring device 50 by wireless communication.

The imaging device 20 may be an infrared camera provided with a filter that selectively transmits infrared rays having a wavelength absorbed by a monitoring target gas (4.3 µm in the case of a CO₂ gas). By using an infrared camera that performs imaging while selectively filtering a specific wavelength, only a specific gas is imaged in the image data from among fluids (gases) in an imaging field.

The gas monitoring device 50 is configured to process measurement data such as the flight height H or the flight velocity v transmitted from the UAV 10 or image data transmitted from the imaging device 20. As illustrated in FIG. 2, the gas monitoring device 50 according to an embodiment includes an image acquisition unit 52, a reframing processing unit 54, an optical flow processing unit 56, a velocity vector acquisition unit 58, a noise component removal unit 60, a flight state acquisition unit 62, a downwash velocity acquisition unit 64, an extraction unit 66, and a display image generation unit 68.

The gas monitoring device 50 includes a computer provided with a processor (CPU, GPU, or the like), a storage device (memory device; RAM or the like), an auxiliary storage unit, an interface, and the like. The gas monitoring device 50 receives a signal from the UAV 10 or the imaging device 20 via the interface. The processor is configured to process the signal received in this manner. In addition, the processor is configured to process a program loaded in the storage device. Accordingly, the functions of the above-described functional units (the image acquisition unit 52 to the display image generation unit 68) are realized.

The content of the processing in the gas monitoring device 50 is implemented as a program executed by the processor. The program may be stored in the auxiliary storage unit. In executing the program, the program is loaded in the storage device. The processor reads the program from the storage device and executes an instruction included in the program.

The image acquisition unit 52 is configured to acquire a plurality of pieces of image data respectively captured at a plurality of times by the imaging device 20 mounted on the UAV 10.

The reframing processing unit 54 is configured to perform reframing processing on the plurality of pieces of image data acquired by the image acquisition unit 52 as necessary.

The optical flow processing unit 56 is configured to perform optical flow estimation processing on the plurality of pieces of image data acquired by the image acquisition unit 52 and subjected to the reframing processing as necessary.

The velocity vector acquisition unit 58 is configured to acquire a plurality of velocity vectors calculated through the optical flow processing by the optical flow processing unit 56.

The noise component removal unit 60 is configured to remove noise components from the plurality of velocity vectors acquired by the velocity vector acquisition unit 58 as necessary.

The flight state acquisition unit 62 is configured to acquire a measurement value of at least one variable indicating the flight state of the UAV 10. In one embodiment, the flight state acquisition unit 62 is configured to acquire a measurement value of the flight height H of the UAV 10 and/or a measurement value of the flight velocity v of the UAV 10 as a variable indicating the flight state of the UAV 10.

The downwash velocity acquisition unit 64 is configured to acquire a downwash velocity u of the UAV 10 based on at least one variable indicating the flight state of the UAV 10. The downwash velocity u is a velocity of a downwash flow in a direction along the ground surface G in the vicinity of the position Pc directly below the UAV 10 on the ground surface.

The extraction unit 66 is configured to extract a gas velocity vector having a magnitude within a range determined based on the downwash velocity u from the plurality of velocity vectors acquired by the velocity vector acquisition unit 58.

The display image generation unit 68 is configured to generate image data (image data for monitoring) indicating information on the monitoring target gas (for example, information on a gas region in which the gas is present, a distribution of gas velocity vectors, and the like) based on the gas velocity vector extracted by the extraction unit 66. The image data generated by the display image generation unit 68 may be output to a display unit 70 for displaying an image.

Further, the gas monitoring device 50 may include a storage unit 69 for storing a correlation between the variable indicating the flight state of the UAV 10 and the downwash velocity of the UAV 10, a correlation between height from the ground surface and wind velocity, and the like. The storage unit 69 may include the storage device (memory device; RAM or the like) or the auxiliary storage device of the computer constituting the gas monitoring device 50, or may include a storage device connected to the computer via a network.

### Flow of Gas Monitoring Method

Hereinafter, a flow of a gas monitoring method according to some embodiments will be described. In the following description, a case where a CO₂ gas, which is a monitoring target gas, is monitored using the gas monitoring device 50 described above will be described. However, a part or all of the procedure described below may be performed using another device or manually, and the monitoring target gas may be a gas other than CO₂.

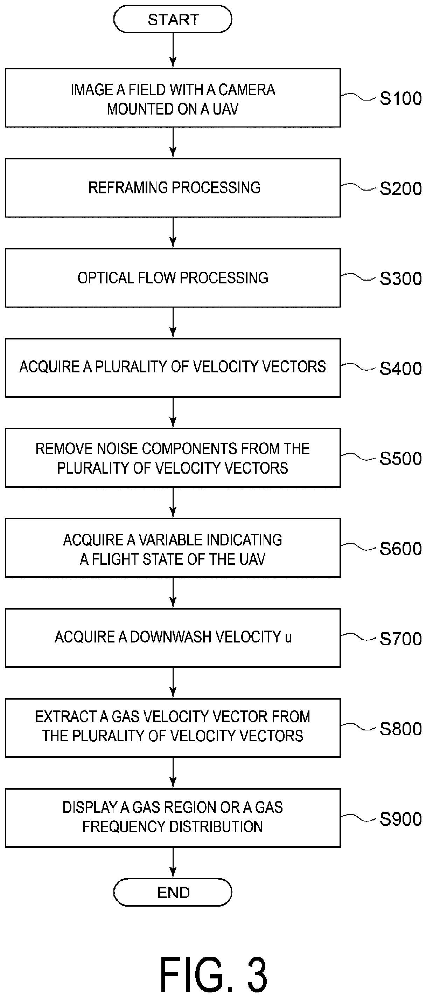

FIG. 3 is a flowchart of a gas monitoring method according to an embodiment.

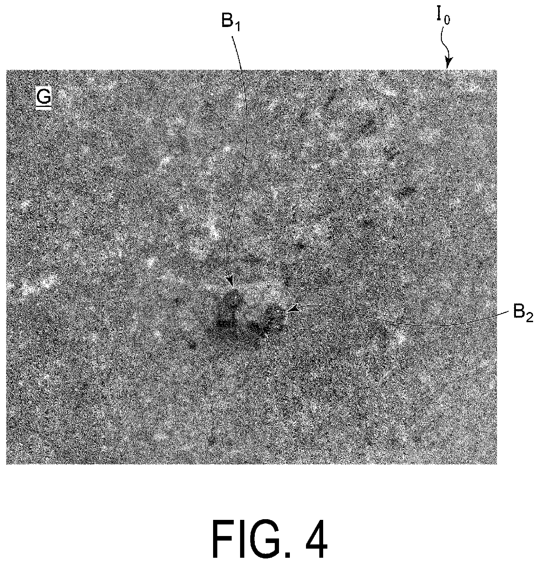

In one embodiment, first, the imaging device 20 mounted on the UAV 10 performs imaging at a plurality of times (S100). The imaging device 20 may continuously image a field below the UAV 10 in time series in a state in which the UAV 10 is flying. FIG. 4 is a diagram illustrating an example of an image captured by the imaging device 20. An image I₀ illustrated in FIG.4 is obtained by imaging the field below the UAV 10 in flight, and includes the ground surface G and CO₂ gas cylinders B1 and B2 installed at the ground surface G. The present embodiment uses, as the imaging device 20, an infrared camera provided with a filter that selectively transmits infrared rays having a wavelength absorbed by the monitoring target gas (4.3 µm in the case of the CO₂ gas).

The image acquisition unit 52 acquires data of a plurality of images (a plurality of pieces of image data) captured by the imaging device 20 as described above.

Next, the reframing processing unit 54 may perform reframing processing on the plurality of pieces of image data acquired by the image acquisition unit 52 in step S100 as necessary (S200). Since optical flow estimation processing can be performed in step S300 to be described below after noises due to the wobble of the UAV 10 are removed in advance by the reframing processing, the accuracy of extracting a gas velocity vector in step S800 to be described below can be further improved. The reframing process in step S200 will be described below.

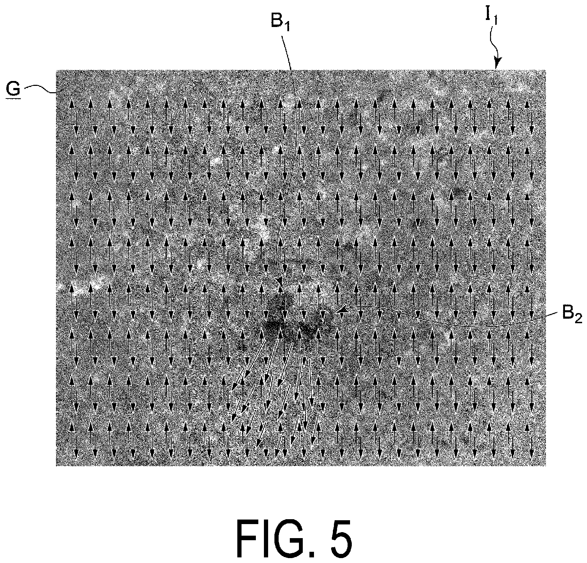

Next, the optical flow processing unit 56 performs the optical flow estimation processing on the plurality of pieces of image data acquired by the image acquisition unit 52 in step S100 or the plurality of pieces of image data subjected to the reframing processing in step S200 (S300). In the optical flow estimation, two pieces of time-series image data which are temporally continuous are used to calculate a plurality of velocity vectors respectively indicating motions of a plurality of pixels in images between the two pieces of image data. The optical flow estimation processing can be performed by, for example, the method described in Patent Document 1. An image I₁ illustrated in FIG. 5 is an example of an image obtained by superimposing the plurality of velocity vectors calculated by the optical flow estimation on the images (captured by the imaging device) subjected to the optical flow estimation processing in step S300.

In the present embodiment, since an infrared camera that performs imaging while selectively filtering a wavelength absorbed by the CO₂ gas is used, only the CO₂ gas is imaged in image data from among fluids (gases) in an imaging field, and is subjected to calculation of optical flow estimation.

Next, the velocity vector acquisition unit 58 acquires the plurality of velocity vectors calculated by the optical flow estimation processing in step S300 (S400).

Next, the noise component removal unit 60 removes noise components from the plurality of velocity vectors acquired in step S400 as necessary (S500). Accordingly, the accuracy of extracting a gas velocity vector in step S800 to be described below can be improved. The noise component removal in step S500 will be described below.

Next, the flight state acquisition unit 62 acquires a measurement value of at least one variable indicating the flight state of the UAV 10 (S600). In step S600, a measurement value of the flight height H of the UAV 10 and/or a measurement value of the flight velocity v of the UAV 10 may be acquired as a variable indicating the flight state of the UAV 10.

Next, the downwash velocity acquisition unit 64 acquires a downwash velocity u of the UAV 10 based on the at least one variable indicating the flight state of the UAV 10 acquired in step S600 (S700). A correlation between the at least one variable indicating the flight state of the UAV 10 and the downwash velocity u of the UAV 10 may be acquired in advance and stored in the storage unit 69. In step S700, based on the measurement value related to the at least one variable indicating the flight state of the UAV 10 acquired in step S600 and the above-described correlation acquired from the storage unit 69, the downwash velocity acquisition unit 64 may acquire the downwash velocity u corresponding to the measurement value.

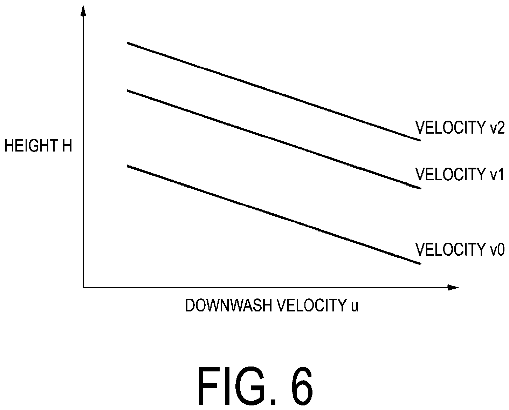

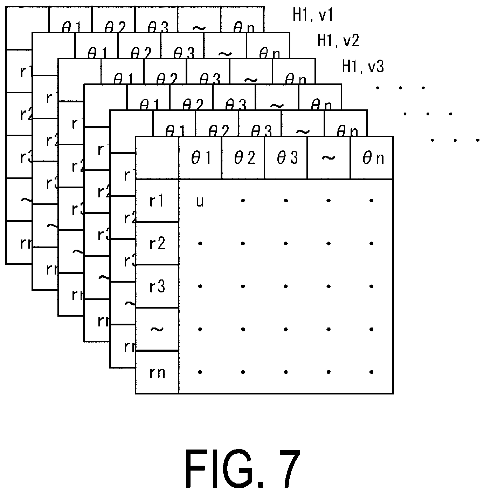

The at least one variable indicating the flight state of the UAV 10 may include the flight height H of the UAV 10 and the flight velocity v of the UAV 10. Here, FIG. 6 and FIG. 7 are examples of graphs or charts each showing a correlation between the flight height H of the UAV 10, the flight velocity v of the UAV 10, and the downwash velocity u of the UAV 10.

In one embodiment, the downwash velocity u may be acquired based on the correlation shown in FIG. 6. That is, the flight height H of the UAV 10, the flight velocity v of the UAV 10, and the downwash velocity u of the UAV 10 have a predetermined correlation as shown in FIG. 6, for example. According to this correlation, the downwash velocity u increases as the flight height increases at the same flight velocity v, and the downwash velocity u increases as the flight velocity increases (note that, in FIG. 6, the flight velocity v satisfies v0 < v1 < v2). This correlation is acquired in advance through a test using the UAV 10 and stored in the storage unit 69. Then, the downwash velocity acquisition unit 64 can acquire the downwash velocity u of the UAV 10 by applying the measurement values of the flight height H and the flight velocity v of the UAV 10 acquired in step S600 to the correlation acquired from the storage unit 69.

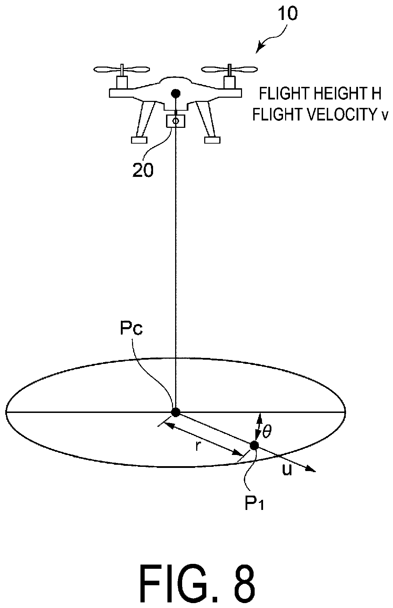

In one embodiment, the downwash velocity u at a position P1 may be acquired based on the correlation shown in FIG. 7. The position P1 is a position near the position Pc directly below the UAV 10. That is, for example, as shown in FIG. 7, the downwash velocity u has a predetermined correlation with a distance r from the position Pc directly below the UAV 10 to P1 on the ground surface and an angle θ (see FIG. 8) from a reference orientation of the position P1 with the position Pc as a center on the ground surface, in addition to the flight height H of the UAV 10 and the flight velocity v of the UAV 10. This correlation is acquired in advance through a test using the UAV 10 and stored in the storage unit 69. Then, the downwash velocity acquisition unit 64 can acquire the downwash velocity u of the UAV 10 by applying the measurement values of the flight height H and the flight velocity v of the UAV 10 acquired in step S600 and the measurement values of the distance r and the angle θ to the correlation acquired from the storage unit 69. The measurement values of the distance r and the angle θ may be input to the gas monitoring device 50 by a measurer via an input device (a keyboard, a mouse, a touch panel, or the like).

FIG. 8 is a diagram for explaining a procedure for acquiring the downwash velocity u, and is a diagram illustrating the distance r from the position Pc directly below the UAV 10 to the position P1 on the ground surface and the angle θ from the reference orientation of the position P1 with the position Pc as the center on the ground surface.

In some embodiments, in step S700, a corrected downwash velocity ug that is a downwash velocity in which a wind velocity Wg at the ground surface G is considered may be acquired. The corrected downwash velocity ug may be calculated based on the downwash velocity u obtained as described above and the wind velocity Wg at the ground surface.

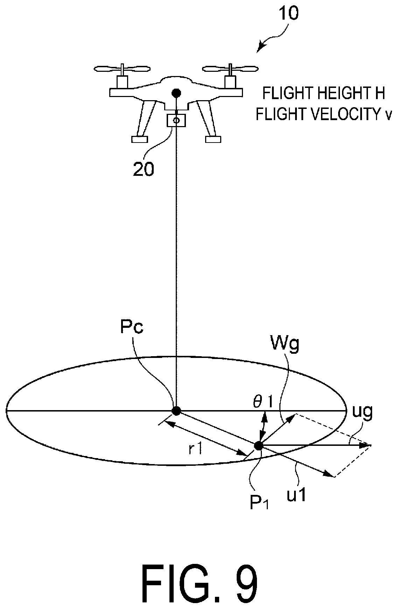

The corrected downwash velocity ug (vector) can be acquired, for example, as a resultant vector of the downwash velocity u (vector) obtained as described above and the wind velocity Wg (vector) at the ground surface (see FIG. 9). FIG. 9 is a diagram for explaining a procedure for acquiring the corrected downwash velocity ug.

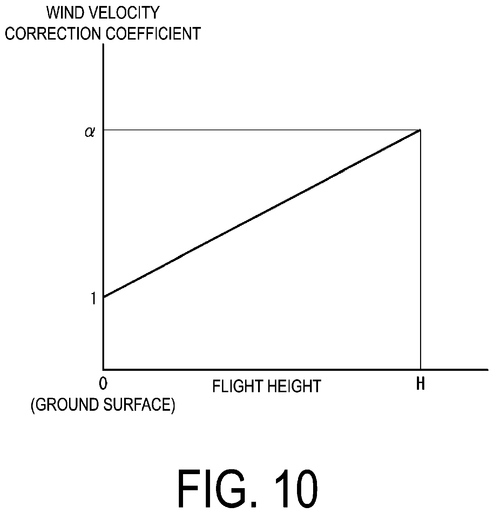

The wind velocity Wg (vector) at the ground surface may be acquired based on a wind velocity W1 (vector) at a flight height of the UAV 10 and a correlation between the height from the ground surface and the wind velocity. FIG. 10 is a graph showing an example of the correlation between the height from the ground surface and the wind velocity. The height from the ground surface and the wind velocity have a correlation as shown in FIG. 10, for example, via a wind velocity correction coefficient α. That is, in the example shown in FIG. 10, the wind velocity correction coefficient α (note that the wind velocity correction coefficient α at the ground surface is zero) is expressed by a linear function with respect to the flight height of the UAV 10. From this function, the relationship between the wind velocity Wg at the ground surface and the wind velocity W1 at a flight height H1 can be expressed by Wg = α1 × W1, where α1 is the wind velocity correction coefficient at the flight height H1. The above-described correlation between the height from the ground surface and the wind velocity may be acquired in advance and stored in the storage unit 69.

Based on the assumption that the wind direction on the ground surface (field) and the wind direction at a flight height of the UAV 10 are the same, and the rate of change of the wind velocity in a height direction is the same regardless of locations on the ground surface (field), the above-described correlation between the height from the ground surface and the wind velocity may be acquired by acquiring a plurality of wind velocities W at the flight height H of the UAV 10 at arbitrary points of the field.

The wind velocity W1 (vector) at a flight height of the UAV 10 may be acquired from a motor current value of the UAV 10 (a current value of a motor for rotationally driving the propeller 14). The UAV 10 can maintain a constant flight velocity by controlling the motor current value of each propeller 14 with respect to a designated flight velocity (and direction), and can maintain the constant flight velocity by controlling the motor load of each propeller 14 even when there is wind around. Accordingly, the wind velocity (the magnitude of the wind velocity W1 (vector)) and the wind direction (the direction of the wind velocity W1 (vector)) can be determined from the motor current value of each propeller 14 of the UAV 10.

Alternatively, the wind velocity W1 at a flight height of the UAV 10 may be acquired based on measurement results of an anemometer (not illustrated) and an anemoscope (not illustrated) which are provided at the UAV 10 and configured to measure a wind velocity and a wind direction, respectively. Signals indicating the measurement results of the anemometer and the anemoscope may be transmitted to the gas monitoring device 50.

That is, the downwash velocity acquisition unit 64 may acquire a motor current value of the UAV 10 and calculate the wind velocity W1 (vector) at a flight height of the UAV 10 based on the motor current value. Alternatively, the downwash velocity acquisition unit 64 may acquire measurement results of the anemometer and the anemoscope provided at the UAV 10, and calculate the wind velocity W1 (vector) at a flight height of the UAV 10 based on the measurement values. Then, the downwash velocity acquisition unit 64 may acquire the correlation between the height from the ground surface and the wind velocity from the storage unit 69, and acquire the wind velocity Wg at the ground surface based on the correlation and the wind velocity W1 at a flight height of the UAV 10 described above. The downwash velocity acquisition unit 64 may acquire the corrected downwash velocity ug based on the wind velocity Wg at the ground surface acquired in this manner and the downwash velocity u described above.

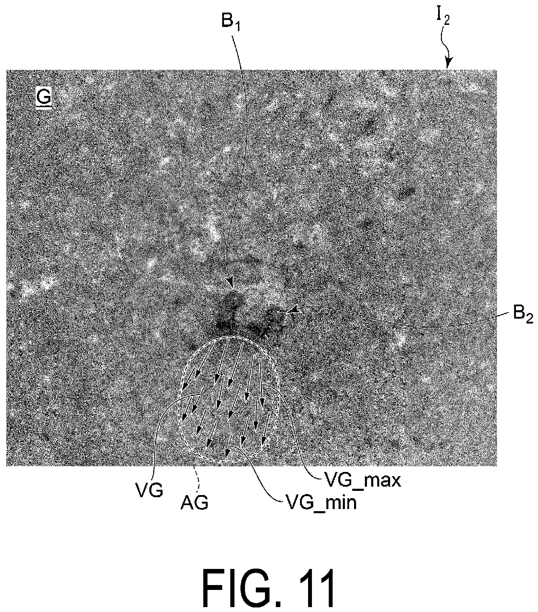

Next, the extraction unit 66 extracts a gas velocity vector VG having a magnitude within a range determined based on the downwash velocity u (or the corrected downwash velocity ug) acquired in step S700 from among the plurality of velocity vectors acquired in step S400 (the plurality of velocity vectors obtained as a result of the optical flow estimation processing; see FIG. 5) (S800). When the noise components have been removed in step S500, in step S800, the gas velocity vector VG having a magnitude within a range determined based on the downwash velocity u (or the corrected downwash velocity ug) acquired in step S700 is extracted from among the plurality of velocity vectors from which the noise components have been removed in step S500. Here, an image I₂ illustrated in FIG. 11 is an example of an image obtained by superimposing the gas velocity vector VG extracted in step S800 on the image (captured by the imaging device) subjected to the optical flow estimation processing in step S300.

In one embodiment, in step S800, for example, among the plurality of velocity vectors acquired in step S400, the velocity vector at the position of the downwash velocity u (or the corrected downwash velocity ug) acquired in step S700 is regarded as having a magnitude of velocity equal to the magnitude of velocity of the downwash velocity u (or the corrected downwash velocity ug). Then, among the plurality of velocity vectors, a velocity vector having a magnitude of velocity close to the downwash velocity u (or the corrected downwash velocity ug) is extracted.

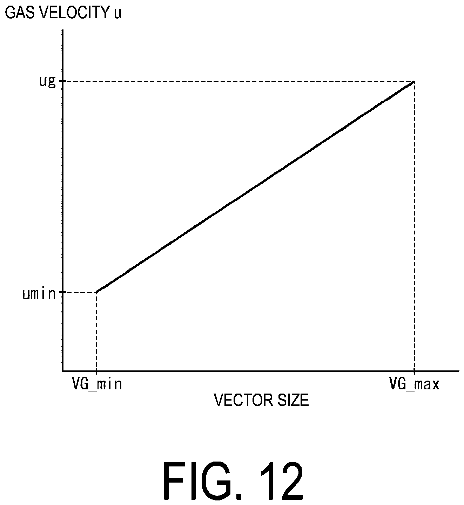

As an example of a method of extracting the gas velocity vector VG, a case in which the gas velocity vector VG having a magnitude within a range determined based on the corrected downwash velocity ug is extracted will be described here. In one example, from among the plurality of velocity vectors, a velocity vector having a magnitude between a velocity vector (VG_max) having the same magnitude as the corrected downwash velocity ug and a velocity vector (VG_min) having the same magnitude as a velocity umin smaller than the corrected downwash velocity ug is extracted as the gas velocity vector VG (see FIG. 12). For example, a velocity vector having a magnitude of 0.25 × ug or more and 1 × ug or less is extracted from among the plurality of velocity vectors. FIG. 12 is a graph for explaining a procedure for extracting the gas velocity vector VG.

In the image I₂ illustrated in FIG. 11, a distribution of extracted gas velocity vectors VG and a gas region AG which is a region in which the extracted gas velocity vectors VG exist are illustrated. The gas velocity vector VG is a vector indicating the flow of the CO₂ gas ejected from the CO₂ gas cylinders.

Based on the gas velocity vector VG extracted in step S800, the display image generation unit 68 may generate image data (image data for monitoring; for example, data of the image I₂ illustrated in FIG. 11, or the like) indicating information on the monitoring target gas (for example, information on a gas region in which the gas is present, a distribution of gas velocity vectors, or the like) based on the gas velocity vector extracted by the extraction unit 66. The image data generated as above may be transmitted to the display unit 70 so as to be output (displayed) on the display unit 70 (S900).

In the optical flow estimation processing in step S300, the directions and relative magnitudes of a plurality of velocity vectors can be calculated, but the absolute magnitudes (absolute values of velocities) cannot be calculated. This is because the distance between the imaging device 20 mounted on the UAV 10 and the imaging target is not constant, and a scale serving as a reference for velocity calculation is not always present in an image.

In this regard, in the above-described embodiment, the downwash velocity u of the UAV 10 can be acquired based on at least one variable (for example, the flight height H or the flight velocity v) indicating the flight state of the UAV 10. Then, with reference to the magnitude of a vector indicating the downwash velocity u of the UAV 10 among the plurality of velocity vectors having unknown magnitudes obtained by the optical flow estimation, a velocity vector having a magnitude within a range determined based on the downwash velocity u (or a magnitude within a range determined based on the corrected downwash velocity ug obtained from the downwash velocity u) can be determined to be the gas velocity vector VG (gas region) indicating the movement velocity and direction of the monitoring target gas from among the plurality of velocity vectors. The gas velocity vector VG extracted as described above can be used to appropriately monitor the gas.

Further, in one embodiment, as described above, the downwash velocity u of the UAV 10 has a correlation with the flight height H and the flight velocity v of the UAV. Accordingly, based on the flight height H of the UAV 10 and the flight velocity v of the UVA, the downwash velocity u of the UAV 10 can be appropriately acquired from the correlation.

In addition, when a wind other than the downwash blows at the ground surface, the flow of the downwash at the ground surface may be affected by the wind. In this regard, in one embodiment, as described above, the corrected downwash velocity ug in which the wind velocity Wg is considered is calculated based on the downwash velocity u obtained based on a variable (the flight height H or the flight velocity v) indicating the flight state of the UAV 10 and the wind velocity Wg at the ground surface. Then, from among the plurality of vectors obtained by the optical flow estimation, the gas velocity vector VG having a magnitude within a range determined based on the corrected downwash velocity ug is extracted. Thus, it is possible to more appropriately extract the gas velocity vector indicating the movement velocity and direction of the monitoring target gas.

### Removal of Noise Components

The processing of removing noise components in step S500 will be described. In some embodiments, in step S500, velocity vectors of noise components may be removed from the plurality of vectors obtained in step S400 (the plurality of vectors calculated in the optical flow estimation processing in step S300) based on a frequency distribution of the magnitudes of the plurality of velocity vectors or a frequency distribution of the directions of the plurality of velocity vectors.

The velocity vectors of noise components tend to have a predetermined pattern in terms of magnitude or direction. In the above-described embodiment, the noise components can be removed from the plurality of vectors based on the frequency distribution of the magnitudes or directions of the plurality of velocity vectors obtained by the optical flow estimation. Further, in step S800, the gas velocity vector is extracted based on the downwash velocity u from the plurality of vectors from which the noise components have been removed, and thus the accuracy of extracting the gas velocity vector VG can be improved.

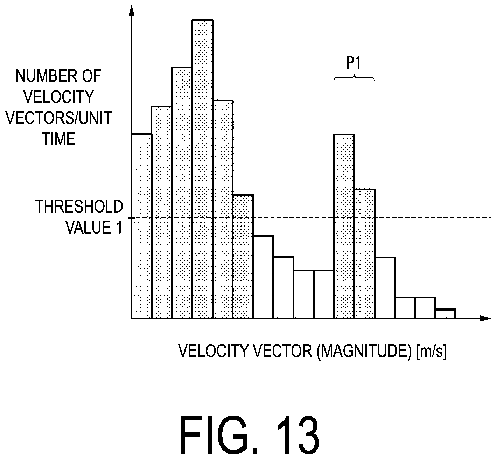

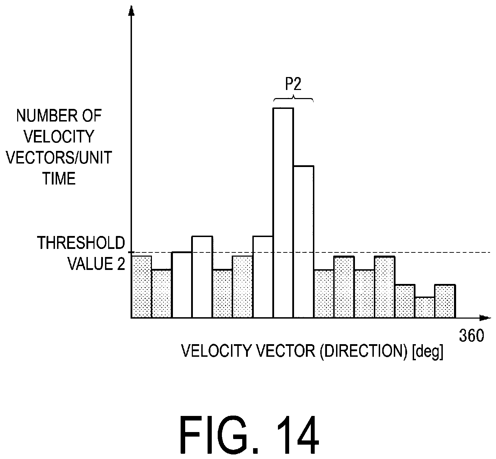

FIG. 13 is a histogram showing an example of the frequency distribution of the magnitudes of the plurality of velocity vectors obtained in step S400, and FIG. 14 is a histogram showing an example of the frequency distribution of the directions of the plurality of velocity vectors obtained in step S400.

In one embodiment, in step S500, velocity vectors whose frequencies belong to a range of magnitudes equal to or greater than a first threshold value (threshold value 1 in FIG. 13) in the frequency distribution of the magnitudes of the plurality of velocity vectors (see FIG.13) and whose frequencies belong to a range of directions equal to or less than a second threshold value (threshold value 2 in FIG. 14) in the frequency distribution of the directions of the plurality of velocity vectors (see FIG. 14) are removed as noise components from the plurality of velocity vectors obtained in step S400.

Velocity vectors of noise components (for example, velocity vectors indicating the wobble of the UAV 10) may have a pattern in which the magnitudes are substantially the same and the directions vary. In the above-described embodiment, it is possible to appropriately remove, as noise components, vectors whose frequencies belong to a range of relatively large frequencies in the frequency distribution of the magnitudes and whose frequencies belong to a range of relatively small frequencies in the frequency distribution of the directions (that is, vectors that match the above-described pattern).

As the first threshold value or the second threshold value, an average value or a median value of the vertical axis of each histogram may be used.

In both the frequency distribution of the magnitudes of the plurality of velocity vectors (see FIG. 13) and the frequency distribution of the directions of the plurality of velocity vectors (see FIG. 14), velocity vectors whose frequencies are larger than the threshold values (for example, vectors included in both a peak indicated by P1 in FIG. 13 and a peak indicated by P2 in FIG. 14) are highly likely to be velocity vectors of the monitoring target gas.

### Reframing Processing

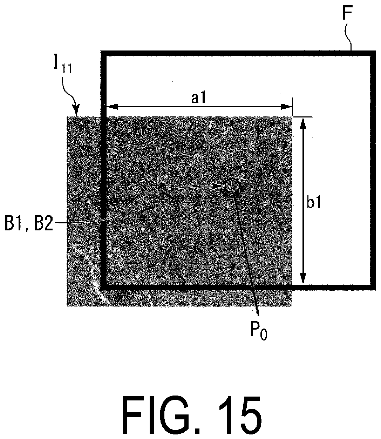

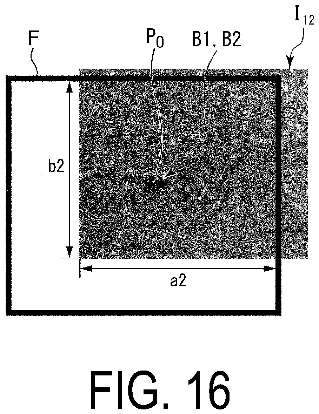

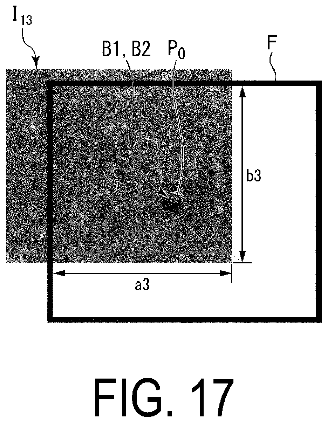

The reframing processing in step S200 will be described. FIG. 15 to FIG. 17 are diagrams for explaining the reframing processing on a plurality of pieces of image data. Images In to I₁₃ illustrated in FIG. 15 to FIG. 17 are images captured in time series by the imaging device 20 mounted on the UAV 10. In the reframing processing, for the image data of each of the images captured in time series, the position of the image with respect to a frame F (a display region of the image) is adjusted by adjusting the aspect ratio (a:b) of the image such that a reference point P₀ is located at a predetermined position (for example, the center position of the frame F) in the frame F (that is, by trimming regions outside the frame F in the image). In the illustrated example, the position of the CO₂ gas cylinders B1 and B2 is set as the reference point P₀, and the positions of the images In to I₁₃ are adjusted such that the reference point P₀ is located at the center of the frame in each of the images, by adjusting the aspect ratios of the images to be a1:b1, a2:b2, and a3:b3, respectively.

Since the UAV 10 moves (for example, wobbles) during imaging with the imaging device 20, imaging positions of the plurality of pieces of image data continuously captured by the imaging device 20 mounted on the UAV 10 may be shifted. In this regard, according to the above-described embodiment, since the reframing processing is performed on the plurality of pieces of image data, the position in the frame F of the imaging target included in the plurality of pieces of image data can be fixed (so-called blur correction can be executed). As described above, the noise due to the wobble of the UAV 10 is removed in advance by performing the reframing processing, and then the optical flow estimation processing is performed in step S300, whereby the accuracy of extracting the gas velocity vector in step S800 can be further improved.

The contents described in the above embodiments can be understood as follows, for example.

(1) A gas monitoring method according to at least one embodiment of the present invention includes:
   acquiring a plurality of velocity vectors obtained by performing an optical flow estimation processing on a plurality of pieces of image data obtained by imaging at a plurality of times with an imaging device (20) mounted on a UAV (10) (S400);
   acquiring a downwash velocity u of the UAV based on at least one variable indicating a flight state of the UAV (S700); and
   extracting a gas velocity vector having a magnitude within a range determined based on the downwash velocity u from the plurality of velocity vectors (S800).

In the method of (1) above, the plurality of velocity vectors obtained by performing the optical flow estimation processing on the time-series image data captured by the imaging device mounted on the UAV includes, in addition to a velocity vector of a detection target gas (gas velocity vector), other velocity vectors (a velocity vector indicating movement of an object other than the detection target gas, noise, and the like). In addition, since a distance between the UAV and an imaging target is not constant and a scale serving as a reference for velocity calculation is not always present in an image. Thus, the magnitude (absolute value of velocity) of each of the plurality of velocity vectors cannot be calculated by the optical flow estimation. On the other hand, with the configuration of (1) above, the downwash velocity u of the UAV can be acquired based on the at least one variable indicating the flight state of the UAV. Then, with reference to the magnitude of a vector indicating the velocity of downwash of the UAV among the plurality of velocity vectors having unknown magnitudes obtained by the optical flow estimation, a velocity vector having a magnitude within a range determined based on the downwash velocity u can be determined to be the gas velocity vector (gas region) indicating the movement velocity and direction of the monitoring target gas from the plurality of velocity vectors. The gas velocity vector extracted as described above can be used to appropriately monitor the gas.

(2) In some embodiments, in the method of (1) above,
the at least one variable indicating the flight state of the UAV includes a flight height H of the UAV and a flight velocity v of the UAV.

The downwash velocity u of the UAV has a correlation with the flight height H and the flight velocity v of the UAV. According to the method of (2) above, based on the flight height H of the UAV and the flight velocity v of the UVA, the downwash velocity u of the UAV can be appropriately acquired from the correlation.

(3) In some embodiments, in the method of (1) or (2) above,
the gas monitoring method further includes
acquiring a wind velocity Wg at a ground surface (S700), and
calculating a corrected downwash velocity ug based on the downwash velocity u and the wind velocity Wg (S700), the corrected downwash velocity ug being a downwash velocity in which the wind velocity Wg is considered,
wherein in the extracting, a gas velocity vector having a magnitude within a range determined based on the corrected downwash velocity ug is extracted from the plurality of velocity vectors.

When a wind other than the downwash blows at the ground surface, the flow of the downwash at the ground surface may be affected by the wind. According to the method of (3) above, the corrected downwash velocity ug in which the wind velocity Wg is considered is calculated based on the downwash velocity u obtained based on the variable indicating the flight state of the UAV and the wind velocity Wg at the ground surface, and the gas velocity vector having a magnitude within the range determined based on the corrected downwash velocity ug is extracted from the plurality of vectors obtained by the optical flow estimation. Thus, it is possible to more appropriately extract the gas velocity vector indicating the movement velocity and direction of the monitoring target gas.

(4) In some embodiments, in the method of (3) above,
a vector of the corrected downwash velocity ug is calculated by combining a vector of the downwash velocity u and a vector of the wind velocity Wg at the ground surface.

According to the method of (4) above, the corrected downwash velocity ug can be appropriately calculated as a resultant vector of the downwash velocity u and the wind velocity Wg.

(5) In some embodiments, in the method of (3) or (4) above,
the gas monitoring method further includes
acquiring a correlation between a height from the ground surface and a wind velocity (S700), and
acquiring a wind velocity W1 at a flight height of the UAV (S700),
wherein in the acquiring the wind velocity Wg at the ground surface, the wind velocity Wg at the ground surface is acquired based on the wind velocity W1 and the correlation.

According to the method of (5) above, the wind velocity Wg at the ground surface is acquired from the wind velocity W1 at a flight height of the UAV based on the correlation between the height from the ground surface and the wind velocity. The corrected downwash velocity ug can be appropriately calculated based on the wind velocity Wg at the ground surface acquired as described above.

(6) In some embodiments, in the method of (5) above,
in the acquiring the wind velocity W1, the wind velocity W1 at a flight height of the UAV is calculated based on a motor current value of the UAV.

The wind velocity W1 at a flight height of the UAV and a current value of a motor driving a propeller of the UAV have a predetermined correlation. According to the method of (6) above, it is possible to appropriately acquire the wind velocity W1 at a flight height of the UAV based on the motor current value of the UAV without using, for example, an anemometer or the like.

(7) In some embodiments, in the method of any one of (1) to (6) above,
the imaging device includes an infrared camera provided with a filter that selectively transmits infrared rays having a wavelength absorbed by the monitoring target gas.

According to the method of (7) above, since the infrared camera provided with the filter that selectively transmits infrared rays having a wavelength absorbed by the monitoring target gas is used as the imaging device, the monitoring target gas can be imaged. Then, the velocity vector indicating the movement of the monitoring target gas can be acquired by performing optical flow processing on time-series image data obtained as above.

(8) In some embodiments, in the method of any one of (1) to (7) above,
the gas monitoring method further includes
removing noise components from the plurality of velocity vectors obtained by performing optical flow estimation processing on the plurality of pieces of image data, based on a frequency distribution of magnitudes of the plurality of velocity vectors or a frequency distribution of directions of the plurality of velocity vectors (S500),
wherein in the extracting, the gas velocity vector is extracted from the plurality of velocity vectors from which the noise components have been removed.

The velocity vectors of noise components tend to have a predetermined pattern in terms of magnitude or direction. According to the method of (8) above, the noise components can be removed from the plurality of vectors based on the frequency distribution of magnitudes or directions of the plurality of velocity vectors obtained by the optical flow estimation. Further, the gas velocity vector is extracted based on the downwash velocity u from the plurality of vectors from which the noise components have been removed, and thus the accuracy of extracting the gas velocity vector can be improved.

(9) In some embodiments, in the method of (8) above,
velocity vectors whose frequencies belong to a range of magnitudes equal to or greater than a first threshold value in the frequency distribution of the magnitudes of the plurality of velocity vectors and whose frequencies belong to a range of directions equal to or less than a second threshold value in the frequency distribution of the directions of the plurality of velocity vectors are removed as the noise components from the plurality of velocity vectors.

The velocity vectors of the noise components may have a pattern in which the magnitudes are substantially the same and the directions vary. According to the method of (9) above, it is possible to appropriately remove, as the noise components, vectors whose frequencies belong to a range of relatively large frequencies in the frequency distribution of the magnitudes and whose frequencies belong to a range of relatively small frequencies in the frequency distribution of the directions (that is, vectors that match the above-described pattern).

(10) In some embodiments, in the method of any one of (1) to (9) above,
the gas monitoring method further includes
acquiring a plurality of pieces of image data obtained by imaging at a plurality of times with the imaging device mounted on the UAV (S100),
performing reframing processing on the plurality of pieces of image data (S200), and
acquiring the plurality of velocity vectors by performing optical flow estimation processing on the plurality of pieces of image data subjected to the reframing processing (S300, S400).

Since the UAV moves (for example, wobbles) during imaging with the imaging device, imaging positions of the plurality of pieces of image data continuously captured by the imaging device mounted on the UAV may be shifted. In this regard, according to the method of (10) above, since the reframing processing is performed on the plurality of pieces of image data, the position in the frame F of the imaging target included in the plurality of pieces of image data can be fixed (so-called blur correction can be executed). As described above, the noise due to the wobble of the UAV is removed in advance by performing the reframing processing, and then the optical flow estimation processing is performed, whereby the accuracy of extracting the gas velocity vector can be further improved.

(11) A gas monitoring device (50) according to at least one embodiment of the present invention includes:
a velocity vector acquisition unit (58) that acquires a plurality of velocity vectors obtained by performing optical flow estimation processing on a plurality of pieces of image data obtained by imaging at a plurality of times with an imaging device mounted on a UAV;
a downwash velocity acquisition unit (64) that acquires a downwash velocity u of the UAV based on at least one variable indicating a flight state of the UAV; and
an extraction unit (66) that extracts a gas velocity vector having a magnitude within a range determined based on the downwash velocity u from the plurality of velocity vectors.

In the configuration of (11) above, the plurality of velocity vectors obtained by performing the optical flow estimation processing on the time-series image data captured by the imaging device mounted on the UAV includes, in addition to a velocity vector of a detection target gas (gas velocity vector), other velocity vectors (a velocity vector indicating movement of an object other than the detection target gas, noise, and the like). In addition, since a distance between the UAV and an imaging target is not constant and a scale serving as a reference for velocity calculation is not always present in an image. Thus, the magnitude (absolute value of velocity) of each of the plurality of velocity vectors cannot be calculated by the optical flow estimation. On the other hand, with the configuration of (11) above, the downwash velocity u of the UAV can be acquired based on the at least one variable indicating the flight state of the UAV. Then, with reference to the magnitude of a vector indicating the velocity of downwash of the UAV among the plurality of velocity vectors having unknown magnitudes obtained by the optical flow estimation, a velocity vector having a magnitude within a range determined based on the downwash velocity u can be determined to be the gas velocity vector (gas region) indicating the movement velocity and direction of the monitoring target gas from the plurality of velocity vectors. The gas velocity vector extracted as described above can be used to appropriately monitor the gas.

(12) A gas monitoring system (100) according to at least one embodiment of the present invention includes:
a UAV (10) equipped with an imaging device (20);
an optical flow estimation processing unit (56) configured to calculate a plurality of velocity vectors by performing optical flow estimation processing on a plurality of pieces of image data obtained by imaging at a plurality of times with the imaging device; and
the gas monitoring device (50) described in (11) above and configured to extract the gas velocity vector from the plurality of velocity vectors.

In the configuration of (12) above, the plurality of velocity vectors obtained by performing the optical flow estimation processing on the time-series image data captured by the imaging device mounted on the UAV includes, in addition to a velocity vector of a detection target gas (gas velocity vector), other velocity vectors (a velocity vector indicating movement of an object other than the detection target gas, noise, and the like). In addition, since a distance between the UAV and an imaging target is not constant and a scale serving as a reference for velocity calculation is not always present in an image. Thus, the magnitude (absolute value of velocity) of each of the plurality of velocity vectors cannot be calculated by the optical flow estimation. On the other hand, with the configuration of (12) above, the downwash velocity u of the UAV can be acquired based on the at least one variable indicating the flight state of the UAV. Then, with reference to the magnitude of a vector indicating the velocity of downwash of the UAV among the plurality of velocity vectors having unknown magnitudes obtained by the optical flow estimation, a velocity vector having a magnitude within a range determined based on the downwash velocity u can be determined to be the gas velocity vector (gas region) indicating the movement velocity and direction of the monitoring target gas from the plurality of velocity vectors. The gas velocity vector extracted as described above can be used to appropriately monitor the gas.

(13) A gas monitoring program according to at least one embodiment of the present invention causes
a computer to execute:
acquiring a plurality of velocity vectors obtained by performing optical flow estimation processing on a plurality of pieces of image data obtained by imaging at a plurality of times with an imaging device mounted on a UAV;
acquiring a downwash velocity u of the UAV based on at least one variable indicating a flight state of the UAV; and
extracting a gas velocity vector having a magnitude within a range determined based on the downwash velocity u from the plurality of velocity vectors.

In the configuration of (13) above, the plurality of velocity vectors obtained by performing the optical flow estimation processing on the time-series image data captured by the imaging device mounted on the UAV includes, in addition to a velocity vector of a detection target gas (gas velocity vector), other velocity vectors (a velocity vector indicating movement of an object other than the detection target gas, noise, and the like). In addition, since a distance between the UAV and an imaging target is not constant and a scale serving as a reference for velocity calculation is not always present in an image. Thus, the magnitude (absolute value of velocity) of each of the plurality of velocity vectors cannot be calculated by the optical flow estimation. On the other hand, with the configuration of (13) above, the downwash velocity u of the UAV can be acquired based on the at least one variable indicating the flight state of the UAV. Then, with reference to the magnitude of a vector indicating the velocity of downwash of the UAV among the plurality of velocity vectors having unknown magnitudes obtained by the optical flow estimation, a velocity vector having a magnitude within a range determined based on the downwash velocity u can be determined to be the gas velocity vector (gas region) indicating the movement velocity and direction of the monitoring target gas from the plurality of velocity vectors. The gas velocity vector extracted as described above can be used to appropriately monitor the gas.

The embodiments of the present invention have been described above. However, the present invention is not limited to the above-described embodiments, and includes forms obtained by modifying the above-described embodiments and forms obtained by appropriately combining these forms.

In the present specification, expressions indicating relative or absolute arrangement such as "in a direction", "along a direction", "parallel", "orthogonal", "center", "concentric", or "coaxial" shall not be construed as indicating only such arrangement in a strict literal sense, but also as indicating a state of being relatively displaced within a tolerance, or by an angle or a distance to the extent that the same function can be obtained.

For example, expressions indicating a state of being equal such as "same," "equal," or "uniform" shall not be construed as indicating only a state of being strictly equal, but also as indicating a state where there is a difference to the extent that the same function can be obtained.

Further, in the present specification, expressions indicating a shape such as a rectangular shape or a cylindrical shape shall not be construed as indicating only a shape such as a rectangular shape or a cylindrical shape in a strict geometrical sense, but also as indicating a shape including a depression, a protrusion, a chamfered portion, or the like to the extent that the same effect can be obtained.

Furthermore, in the present specification, expressions such as "comprising" "including" or "having" one component are not intended as exclusive expressions that exclude the presence of other components.

### Reference Signs List

10 UAV
12 UAV main body
14 Propeller
20 Imaging device
50 Gas monitoring device
52 Image acquisition unit
54 Reframing processing unit
56 Optical flow processing unit
58 Velocity vector acquisition unit
60 Noise component removal unit
62 Flight state acquisition unit
64 Downwash velocity acquisition unit
66 Extraction unit
68 Display image generation unit
69 Storage unit
70 Display unit
100 Gas monitoring system
AG Gas region
B1 CO₂ gas cylinder
B2 CO₂ gas cylinder
D Downwash
F Frame
G Ground surface
P0 Reference point
VG Gas velocity vector

## Claims

1. A gas monitoring method comprising:
acquiring a plurality of velocity vectors obtained by performing optical flow estimation processing on a plurality of pieces of image data obtained by imaging at a plurality of times with an imaging device mounted on a UAV;
acquiring a downwash velocity u of the UAV based on at least one variable indicating a flight state of the UAV; and
extracting a gas velocity vector having a magnitude within a range determined based on the downwash velocity u from the plurality of velocity vectors.

2. The gas monitoring method according to claim 1, wherein the at least one variable indicating the flight state of the UAV includes a flight height H of the UAV and a flight velocity v of the UAV.

3. The gas monitoring method according to claim 1 or 2, further comprising
acquiring a wind velocity Wg at a ground surface, and
calculating a corrected downwash velocity ug based on the downwash velocity u and the wind velocity Wg, the corrected downwash velocity ug being a downwash velocity in which the wind velocity Wg is considered,
wherein in the extracting, a gas velocity vector having a magnitude within a range determined based on the corrected downwash velocity ug is extracted from the plurality of velocity vectors.

4. The gas monitoring method according to claim 3, wherein a vector of the corrected downwash velocity ug is calculated by combining a vector of the downwash velocity u and a vector of the wind velocity Wg at the ground surface.

5. The gas monitoring method according to claim 3, further comprising
acquiring a correlation between a height from the ground surface and a wind velocity, and
acquiring a wind velocity W1 at a flight height of the UAV,
wherein in the acquiring the wind velocity Wg at the ground surface, the wind velocity Wg at the ground surface is acquired based on the wind velocity W1 and the correlation.

6. The gas monitoring method according to claim 5, wherein in the acquiring the wind velocity W1, the wind velocity W1 at a flight height of the UAV is calculated based on a motor current value of the UAV.

7. The gas monitoring method according to claim 1 or 2, wherein the imaging device includes an infrared camera provided with a filter that selectively transmits infrared rays having a wavelength absorbed by a monitoring target gas.

8. The gas monitoring method according to claim 1 or 2, further comprising
removing a noise component from the plurality of velocity vectors obtained by performing optical flow estimation processing on the plurality of pieces of image data, based on a frequency distribution of magnitudes of the plurality of velocity vectors or a frequency distribution of directions of the plurality of velocity vectors,
wherein in the extracting, the gas velocity vector is extracted from the plurality of velocity vectors from which the noise component has been removed.

9. The gas monitoring method according to claim 8, wherein a velocity vector of the plurality of velocity vectors is removed as the noise component from the plurality of velocity vectors, the velocity vector having a magnitude whose frequency belongs to a range of magnitudes equal to or greater than a first threshold value in the frequency distribution of the magnitudes of the plurality of velocity vectors and having a direction whose frequency belongs to a range of directions equal to or less than a second threshold value in the frequency distribution of the directions of the plurality of velocity vectors.

10. The gas monitoring method according to claim 1 or 2, further comprising
acquiring a plurality of pieces of image data obtained by imaging at a plurality of times with the imaging device mounted on the UAV,
performing reframing processing on the plurality of pieces of image data, and
acquiring the plurality of velocity vectors by performing optical flow estimation processing on the plurality of pieces of image data subjected to the reframing processing.

11. A gas monitoring device comprising:
a velocity vector acquisition unit configured to acquire a plurality of velocity vectors obtained by performing optical flow estimation processing on a plurality of pieces of image data obtained by imaging at a plurality of times with an imaging device mounted on a UAV;
a downwash velocity acquisition unit configured to acquire a downwash velocity u of the UAV based on at least one variable indicating a flight state of the UAV; and
an extraction unit configured to extract a gas velocity vector having a magnitude within a range determined based on the downwash velocity u from the plurality of velocity vectors.

12. A gas monitoring system comprising:
a UAV equipped with an imaging device;
an optical flow estimation processing unit configured to calculate a plurality of velocity vectors by performing optical flow estimation processing on a plurality of pieces of image data obtained by imaging at a plurality of times with the imaging device; and
the gas monitoring device according to claim 11 configured to extract the gas velocity vector from the plurality of velocity vectors.

13. A gas monitoring program causing a computer to execute:
acquiring a plurality of velocity vectors obtained by performing optical flow estimation processing on a plurality of pieces of image data obtained by imaging at a plurality of times with an imaging device mounted on a UAV;
acquiring a downwash velocity u of the UAV based on at least one variable indicating a flight state of the UAV; and
extracting a gas velocity vector having a magnitude within a range determined based on the downwash velocity u from the plurality of velocity vectors.
